# EUROPEAN PATENT APPLICATION

(11) **EP 1 369 655 A1**
(43) Date of publication of application: **10.12.2003**
(21) Application number: 02425365.0
(22) Date of filing: 03.06.2002
(51) Int. Cl.: F28D 1/02

(54) **Thermal diffuser, in particular for household radiators**

(71) Applicant: Gold, Robert A., 00063 Campagnano di Roma RM (IT)
(72) Inventor: Gold, Robert A., 00063 Campagnano di Roma RM (IT)
(74) Representative: Leone, Mario

(57) **Abstract**

A thermal diffuser (1), apt to be physically associated to a thermal radiator (C), allows an optimal distribution of the warm air produced by the radiator (C) enhancing its efficiency and comprises: means (21) for collecting warm air positioned in correspondence with radiating elements of said thermal radiator (C); suction and ventilation means (6) that suck and convey said warm air; and means (31) for diffusing said warm air according to a direction oriented towards the environment that houses said thermal radiator.

## Description

The present invention relates to a thermal diffuser, suitable for being associated in particular to household radiators, or heaters.

Commonly used heating systems comprise systems using fixed radiators, generally located on the floor at walls and positioned vertically, with a warm fluid, generally water heated by a boiler, flowing through them, and emanating heat by convection, i.e. by heating the surrounding air, and by irradiation. To enhance the effect of convection, such radiators are subdivided into distinct elements, each with water flowing through it, in order to increase the heating surface.

Therefore, the convection component is usually the most important one. However, it produces less than optimal effects, in particular because air, becoming lighter as it is heated, rises.

This upwards motion of the air causes a layering of the air which will be warmer at a certain height from the ground, slowing the global heating of a space wherein the thermal radiator is inserted.

The long period of time elapsing before the environment is comfortably heated is a drawback.

Moreover, together with air are raised smoke, dirt, vapours, suspended particles that are inevitably breathed and that, in the long run, dirty the walls.

Another generally observed drawback consists of the poor thermal efficiency of radiators which, belonging to large and complex hydraulic circuits, have the water within them flowing at slow rates, which allow for a limited extraction of the heat from each radiating element.

The technical problem at the roots of the present invention is to provide a thermal diffuser that allows to overcome the drawbacks mentioned with reference to the prior art.

This problem is solved by a thermal diffuser apt to be physically associated to a thermal radiator comprising:
* means for collecting warm air positioned at radiating element of said thermal radiator;
* suction and ventialtion means that suck and convey said warm air; and
* means for diffusing said warm air according to a direction oriented towards the space that houses said thermal radiator.

The main advantage of the thermal diffuser according to the present invention resides in its allowing an optimal diffusion of the warm air forcibly extracted from the radiator, enhancing the efficiency thereof.

The present invention shall be described hereinafter according to some preferred embodiments thereof, provided solely by way of non limiting example with reference to the examples that follow and to the accompanying drawings wherein:
* Figure 1 shows a perspective view of a first embodiment of a thermal diffuser according to the invention;
* Figure 1A shows a partial longitudinal section of the diffuser of Figure 1, taken according to a line A-A;
* Figure 1b shows a partial cross section of the diffuser of Figure 1, taken according to a line B-B;
* Figure 2 shows a perspective view of a second embodiment of a thermal diffuser according to the invention;
* Figure 2A shows a partial longitudinal section of the diffuser of Figure 2, taken according to a line A-A;
* Figure 2b shows a partial cross section of the diffuser of Figure 2, taken according to a line B-B;
* Figure 3 shows a perspective view of a third embodiment of a thermal diffuser according to the invention;
* Figure 3A shows a partial longitudinal section of the diffuser of Figure 3, taken according to a line A-A; e
* Figure 3b shows a partial cross section of the diffuser of Figure 3, taken according to a line B-B.

In the examples to be described hereinafter, the same numerical references will be used for equivalent parts.

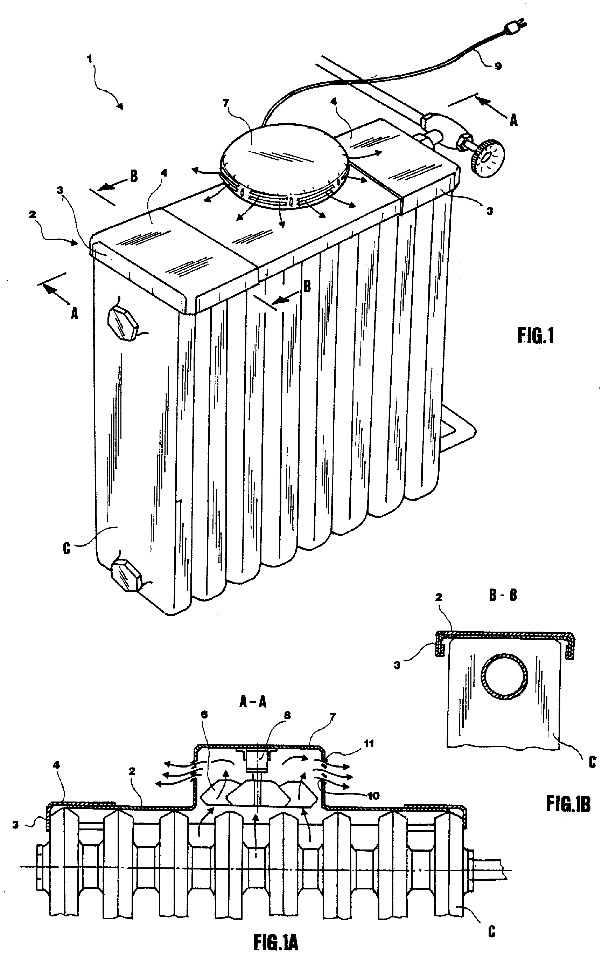

With references to Figures 1, 1A and 1B a thermal diffuser is generally indicated as 1. It is associated to a common household thermal radiator C, of the type formed with plate-like radiating elements, set side by side and vertical, mutually communicating in such a way as to allow warm water to flow inside them.

Said radiator comprises means for collecting warm air positioned at radiating elements of said thermal radiator. In particular, in the present embodiment, said collecting means are positioned at the top of the radiating elements and are formed by a plate 2, set down on the plane formed by the radiating elements, provided with a vertical band 3 in correspondence with its periphery, said band 3 being adjacent to the vertical surfaces of the radiating elements.

Said plate 2 is extensible and hence can be adapted to radiators of different dimensions. In particular, the plate 2 is subdivided into segments 4 in mutually telescopic relationship with each other.

At the central portion 5 thereof, the thermal diffuser 1 comprises suction and ventilation means that suck and convey the warm air heated by the radiator C.

Said suction and ventilation means comprise a fan 6 housed within a structure 7 that defines a compartment dedicated thereto. The fan 6 is driven by an electric motor 8, in particular of the low power type.

The electric motor can be supplied from the normal distribution network, in which case the diffuser 1 comprises an electrical plug 9 connected, if necessary, to suitable transformer means to supply the electric motor with the correct voltage.

The circuit for supplying power to the suction and ventilation means further comprises a thermometer, conventional and not shown herein, sensitive to the temperature of the surface of the radiator C or of the air heated thereby and calibrated accordingly. The circuit is provided in such a way to have the electric motor 8 supplied only when the radiator is operating. Said circuit can further comprise a timer, also conventional and not shown, such as to induce a cyclical operation of the diffuser.

Therefore, if the air coming from the radiator is not at the adequate temperature, by means of the thermometer and/or by means of the timer the electric motor 8 stops its rotation, slowing the air down and allowing its heating.

According to a variation of the present invention, said power supply circuit comprises a Peltier circuit, of the type that induces the circulation of electric current in a circuit that is heated at one of its ends. Therefore, the electric motor can be powered directly by the Peltier circuit, which however is able to produce a rather low voltage, a function of the temperature difference, or by a buffer battery charged by the Peltier circuit. The same effect can be obtained thanks to appropriate photovoltaic cells inserted in the environment, to exploit artificial light, or outdoors, to collect sunlight, which supply power to said buffer battery.

According to an additional variation, the power supply circuit comprises a rechargeable and interchangeable battery or a compartment intended to house disposable batteries. Said variations make it unnecessary to have a mains outlet present in the vicinity of the radiator for supplying power to the thermal diffuser 1.

Lastly, an additional variation comprises an adjustable motor with variable velocity of rotation.

Said diffuser 1 further comprises means for diffusing said warm air, according to a direction oriented towards the environment that houses said thermal radiator C.

In the present embodiment, the diffuser means comprise one or more slits 10 obtained in the structure 7 that houses the fan 6, in correspondence with the central portion of the diffuser 1, i.e. collecting means. Said slits comprise fins 11, preferably of the type that can be oriented, which drive the warm air extracted from the radiator according to the desired direction: the direction of the centre of the room that houses the radiator or else downwards, in order to prevent the rising motion of the warm air near the radiator.

In this way, thermal layering inside the room is substantially reduced, determining an improved environmental comfort.

Variations of the present embodiment can comprise a filter, formed by a sheet of filtering material such as synthetic wool, carbon wool and the like, positioned in correspondence with the structure 7, so that all the warm air collected by the collecting means passes through said filter.

It is understood that the length of the vertical bands 3 may be varied at will and that the extensible segments 4 may be extended also in the direction of the depth.

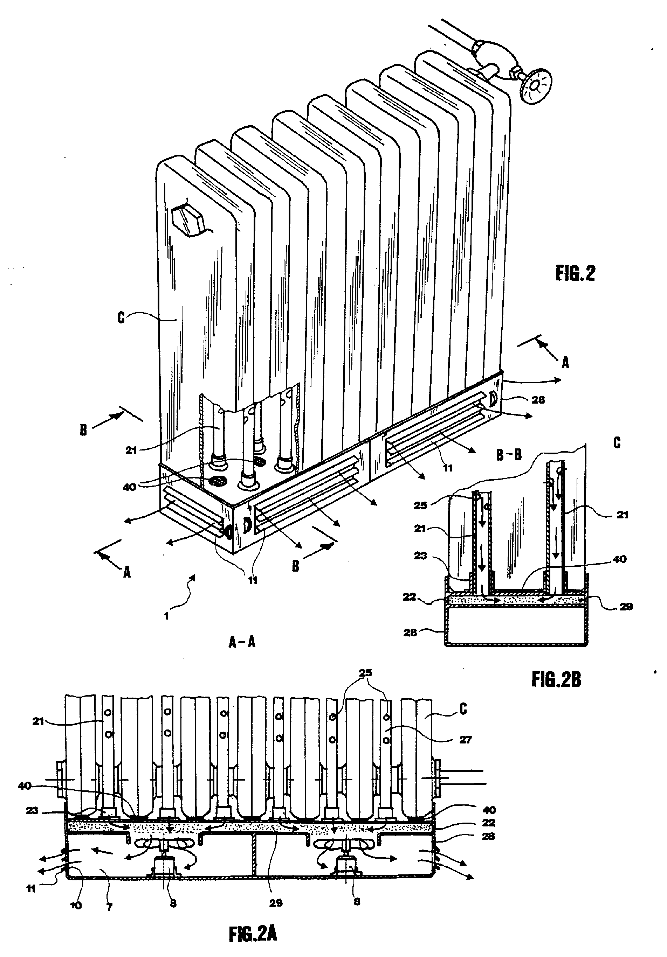

With reference to Figures 2, 2A and 2B, another embodiment of diffuser according to the present invention is described.

In said diffuser 1, the means for collecting warm air are positioned at the lower portion of said heat radiator C but, as shall become readily apparent hereafter, they can be positioned, substantially without modification, above the radiator.

Said collecting means comprise a plurality of tubes 21 positioned vertically between the radiating elements. They are connected to a collection chamber 22, substantially plate- and box-shaped, by means of pressure couplings 23 obtained with a hose made of flexible material.

It is understood that, in some variations, the collection chamber may also comprise an equivalent hood structure.

The tubes 21 have variable length and can be obtained from tube-shaped segments, apt to be coupled to each other. Each tube 21 is open at the top end and inferiorly it ends inside the collection chamber 22. On its own tubular surface, it comprise opening 25, in correspondence with each of which the tube 21 comprises a fin 26 oriented towards the channel internal to the tube 21.

The openings 25 are obtained at the central and upper region of the radiator C.

The fins 26 are oriented in such a way as to determine a helical path for the air that flows through the tubes 21, as will become readily apparent hereinafter, from above downwards in the present configuration.

The tubular surface 27 of each tube is opaque, i.e. it has a high absorption coefficient for wavelengths corresponding to temperatures of between 30°C and 100°C.

The collection chamber 22 is constructed in a modular box-shaped structure 28: a variable number of box-shaped structures 28 will be able to cover the whole length of any radiator C.

Inside each box-shaped structure, the diffuser 1 comprises suction and ventilation means that suck and convey said warm air. As in the previous example, they comprise a fan 6 driven by an electric motor 8 provided with an electrical power supply circuit. To these components are applied the same variations mentioned for the first example.

Each box-shaped structure 28 generally defines a structure equivalent to the one described above, which houses the respective fan 6. It is provided with means for diffusing said warm air according to a direction oriented towards the space that houses said thermal radiator.

In the present embodiment, the diffuser means comprise one or more slits 10 obtained in the structure 7 which houses the fan. Said slits comprise fins 11, preferably able to be oriented, which drive the warm extracted from the radiator in the desired direction: in the direction of the centre of the room that houses the radiator or downwards, in order to prevent or reduce the rising motion of the warm air in correspondence with the radiator.

In this way, thermal layering inside the room is substantially reduced, providing for better environmental comfort.

The present embodiment comprises a filter 29, formed by a sheet of filtering material such as synthetic wool, carbon wool and the like, positioned inside the collection chamber 22, so that all the warm air collected by the collecting means passes through said filter 29.

The entire diffuser 1 is secured to the radiator C by means of snap-on couplings, not shown herein, and/or magnetic elements 40.

The entire diffuser can, in any case, be mounted reversed: with the box-shaped structure 28 set down above the radiator C and the tubes 21 inserted between the radiating elements. In this case, the collecting means may comprise openings obtained on the face of the collection chamber 22 oriented towards and in contact with the radiator C.

Moreover, the openings 25 on the tube 21 may be formed over the entire length of the tube, i.e. also at the collection chamber 22.

It should be noted that the air, intaked inside the tubes 21 through the second openings 25, enters an environment that is strongly heated thanks to the opacity of the tubular surface 27 by contact with the radiating elements, thanks to the fins 26. The air is also forced to follow a tortuous path by the fins 26 and therefore its temperature can effectively be made to increase. Note also that the extracted air comes from the warmer areas of the radiator C: the central upper ones.

It is also understood that the vertical configuration of the tubes 21 is only one of the possible configurations: the tubes 21 may have a curved, coiled, spiralling, or a similar path inside the radiating elements. In this regard the tubes 21 may be at least partially flexible.

According to a variation, the motors are present in pairs and the motors of the single pair are counter-rotating, to eliminate part of the vibrations and hence the noise produced.

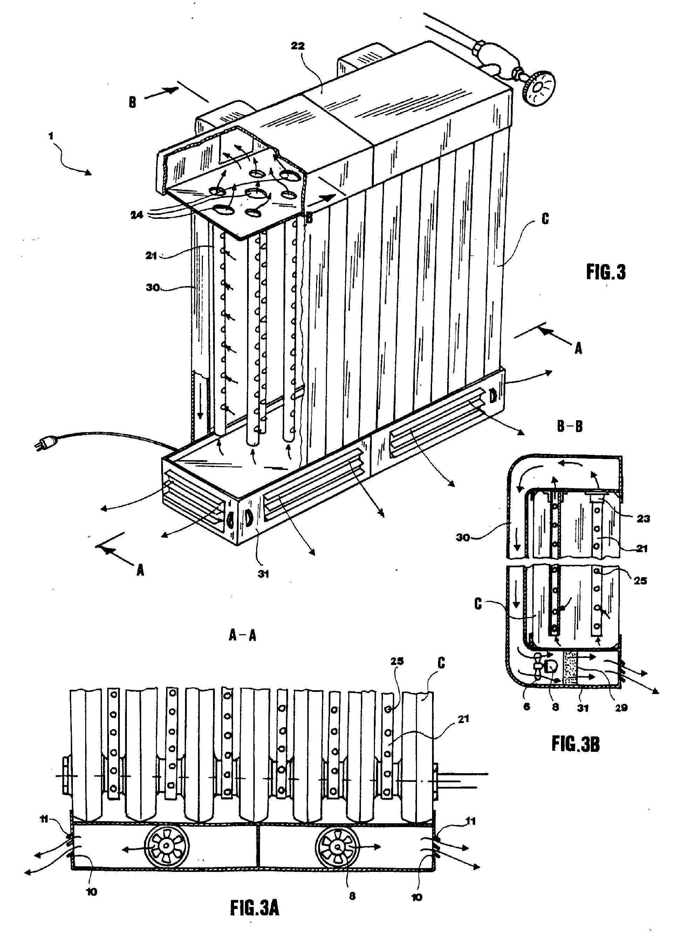

With reference to Figures 3, 3A and 3B, another embodiment of the diffuser according to the present invention is described herein.

In said diffuser 1, the means for collecting warm air are positioned in correspondence with the upper portion of said thermal radiator C.

Said collector means comprise a plurality of tubes 21 positioned vertically between the radiating elements. They are connected to a collection chamber 22, substantially plate- and box-shaped, by means of pressure couplings 23 obtained with a hose made of flexible material.

Said collector means further comprise first openings 24 obtained on the face of the collection chamber 22 oriented towards and in contact with the radiator C, in the present embodiment the upper one.

The tubes 21 have a variable length and can be obtained from tube-shaped segments that can be mutually coupled. Each tube 21 can be opened at the lower end and superiorly it ends inside the collection chamber 22. On its own tubular surface, it comprises second openings 25.

The tubular surface 27 of each tube can be opaque, i.e. have a high absorption coefficient for wavelengths corresponding to temperatures of between 30°C and 100°C.

The collection chamber 22 can be modular: a variable number of chambers may cover parts or the whole length of any radiator C.

The diffuser 1 comprises suction and ventilation means that suck and convey said warm air. As in the previous example, they comprise a fan 6 driven by an electric motor 8 provided with an electrical power supply circuit. To these components are applied the same variations mentioned for the first example.

They also comprise at least a conduit 30, possibly flexible and with variable length which connects the collection chamber 22 with a box-shaped diffusion chamber 31, positioned underneath the radiator C, into which said conduit 30 ends.

The fan 6 and the respective motor 8 are positioned in correspondence with the lower end of the conduit 30 or inside the diffusion chamber 31. According to a variation the walls of the diffusion chamber are thermally insulated.

In this embodiment the diffuser 1 can comprise a dual fan, with related dual motor, at the two ends of the conduit 30.

Each diffusion chamber 31 is provided with means for diffusing said warm air according to a direction oriented towards the space that houses said thermal radiator.

In the present embodiment, the diffuser means comprise one or more slits 10 obtained in the walls of the diffusion chamber 31. Said slits comprise fins 11, preferably suitable to be oriented, driving the warm air extracted from the radiator in the desired direction.

In this way, thermal layering inside the room is substantially reduced, determining an improved environmental comfort.

The present embodiment comprises a filter 29, formed by a sheet of filtering material such as synthetic wool, carbon wool and the like, positioned inside the diffusion chamber 31, so that all the warm air collected by the collecting means passes through said filter 29.

The diffusion chamber 31 is secured to the radiator C by means of snap-on couplings, not shown herein, and/or magnetic elements, screw clamps, bands, rubber bands or simply supported by the respective conduits 30 and by suitable feet.

The same conduits 30 constitute a thermal accumulation, which allows at least to maintain the air warm during the passage from the upper area to the lower area or further to increase the temperature.

In this regard, the conduits 30 can be provided with fins to increase the heat exchange surface.

It is understood that all embodiments described above may be subject to additional variations. They may comprise scenting means, for instance cartridges of scenting material inserted in points where the scent can infuse the warm air expelled outwards; humidifying means, constituted by easily accessed and filled tanks that put the warm air about to be expelled with a water surface; and mixing means, i.e. appropriate throttled windows positioned upstream of the ventilation means that constitute an air intake external to the radiator C.

Additionally, when required, the openings obtained in the collection chambers and in the tubes may be apt to be closed and/or throttled.

According to a variation, the diffuser according to one of the embodiments described above can also be used to heat or dry a different space from the one in which the radiator is positioned, thanks to appropriate connecting conduits between diffuser and destination environment.

To the thermal diffuser described above, a person versed in the art, in order to meet additional and contingent requirements, may apply numerous other modifications and variations, without thereby departing from the scope of protection of the present invention, as defined by the accompanying claims.

## Claims

1. Heat diffuser (1) apt to be physically associated to a thermal radiator (C) comprising:
* means (2, 3; 21, 22) for connecting warm air, positioned at radiating elements of said thermal radiator (C);
* suction and ventilation means (8) that suck and convey said warm air; and
* means (7, 10, 11; 31, 10, 11) for diffusing said warm air according to a desired direction towards the environment to be heated.

2. Diffuser (1) as claimed in claim 1, wherein said collecting means are positioned at the top of the radiating elements.

3. Diffuser (1) as claimed in claim 1, wherein said collecting means comprise a plate (2), set down on the plane formed by the radiating elements.

4. Diffuser (1) as claimed in claim 3, wherein the plate (2) is formed by a vertical band (3) in correspondence with its own periphery, said band (3) being adjacent to the vertical surfaces of the radiating elements.

5. Diffuser (1) as claimed in claim 3, wherein said plate (2) is extensible.

6. Diffuser (1) as claimed in claim 1, wherein said suction and ventilation means comprise a fan (6) driven by an electric motor (8).

7. Diffuser (1) as claimed in claim 5, comprising, for said electric motor (8), a power supply circuit that has a thermometer sensitive to the temperature of the surface of the radiator (C) and/or of the air heated thereby, said power supply circuit being provided to have the electric motor (8) supplied only when the thermal radiator (C) is operating.

8. Diffuser (1) as claimed in claim 5, comprising, for said electric motor (8), a power supply circuit having a timer to induce a cyclical operation of the diffuser (1).

9. Diffuser (1) as claimed in claim 5, comprising, for said electric motor (8), a power supply circuit that has a Peltier circuit.

10. Diffuser (1) as claimed in claim 9, comprising a buffer battery charged by the Peltier circuit and/or by one or more photovoltaic cells.

11. Diffuser (1) as claimed in claim 5, comprising, for said electric motor (8), a power supply circuit having a rechargeable and interchangeable battery and/or a compartment destined to house disposable batteries.

12. Diffuser (1) as claimed in claim 1, wherein said diffuser means comprise one or more slits (10), optionally having fins (11) that can be fixed or apt to be oriented.

13. Diffuser (1) as claimed in claim 1, wherein said collecting means comprise a plurality of tubes (21) positioned between the radiating elements, connected to a collection chamber (22).

14. Diffuser (1) as claimed in claim 1, wherein said collecting means comprise a collection chamber (22) provided with openings (24) obtained on the face of the collection chamber (22) oriented towards and at the radiator (C).

15. Diffuser (1) as claimed in claim 13, wherein said tubes (21) are opened at the end and comprise respective openings (25).

16. Diffuser (1) as claimed in claim 15, wherein at openings (25) the respective tube (21) comprises a respective fin (26) oriented towards the channel internal to the tube (21).

17. Diffuser (1) as claimed in claim 16, wherein the fins (26) are so oriented at to determine a helical path for the air that flows through the tubes (21).

18. Diffuser (1) as claimed in claim 13, wherein the tubular surface (27) of each tube (21) is opaque, i.e. it has a high absorption coefficient for wavelengths corresponding to temperatures of between 30°C and 100°C.

19. Diffuser (1) as claimed in claim 13, wherein said tubes (21) are at least partially flexible.

20. Diffuser (1) as claimed in claim 13, comprising a filter (29), formed by a sheet of filtering material.

21. Diffuser (1) as claimed in claim 1, wherein the entire diffuser (1) is secured to the radiator (C) by means of snap-on couplings and/or magnetic elements and/or screw clamps, bands, rubber bands, feet.

22. Diffuser (1) as claimed in claim 1, wherein the suction and ventilation means comprise at least a conduit (30) between a collection chamber (22) of the collecting means, positioned at the top of the radiator (C), and a diffusion chamber (31).

23. Diffuser (1) as claimed in claim 22, wherein the fan (6) and the respective motor (8) are positioned at the lower end of the conduit (30) or in the diffusion chamber.

24. Diffuser (1) as claimed in claim 22, comprising a dual fan, with associated dual motor, at the two ends of the conduit (30).
